Europäisches Patentamt

European Patent Office

Office européen des brevets

(11) Publication number: **0 526 745 A1**

## EUROPEAN PATENT APPLICATION

(21) Application number: **92111473.2**

(22) Date of filing: **07.07.92**

(51) Int. Cl.⁵: **C09K 5/04**

(30) Priority: **08.07.91 JP 194751/91**

(43) Date of publication of application:
**10.02.93 Bulletin 93/06**

(84) Designated Contracting States:
**BE DE ES FR GB IT NL**

(71) Applicant: **DAIKIN INDUSTRIES, LIMITED**
**Umeda Center Building, 4-12, Nakazaki-nishi**
**2-chome, Kita-ku**
**Osaka-shi, Osaka-fu(JP)**

(72) Inventor: **Omure, Yukio, c/o Yodogawa**
**Seisakusho of**
**DAIKAN IND. LTD.,1-1, Nishihitotsuya,**
**Settsu-shi, Osaka-fu,(JP)**
Inventor: **Noguchi, Masahiro, c/o Yodogawa**
**Seisakusho of**
**DAIKAN IND. LTD.,1-1, Nishihitotsuya,**
**Settsu-shi, Osaka-fu,(JP)**
Inventor: **Fujiwara, Katsuki, c/o Yodogawa**
**Seisakusho of**
**DAIKAN IND. LTD.,1-1, Nishihitotsuya,**
**Settsu-shi, Osaka-fu,(JP)**
Inventor: **Momota, Hiroshi, c/o Yodogawa**
**Seisakusho of**
**DAIKAN IND. LTD.,1-1, Nishihitotsuya,**
**Settsu-shi, Osaka-fu,(JP)**

(74) Representative: **Schüler, Horst, Dr. et al**
**Patentanwalt, Kaiserstrasse 69**
**W-6000 Frankfurt/Main 1(DE)**

(54) **Maximum boiling azeotropic composition and azeotropelike compositions.**

(57) The invention provides an azeotrope-like binary composition comprising not less than 65 mole percent of 1,1,1-trifluoroethane and not more than 35 mole percent of pentafluoroethane.

The invention further provides a refrigerator in which an azeotrope-like binary composition comprising not less than 65 mole percent of 1,1,1,-trifluoroethane and not more than 35 mole percent of pentafluoroethane is used as a refrigerant.

FIELD OF THE INVENTION

The present invention relates to a maximum azeotropic composition and azeotrope-like compositions, each comprising two fluoroalkanes.

BACKGROUND OF THE INVENTION

Hithertofore chlorofluoroalkanes such as trichlorofluoromethane (CFC11), dichlorodifluoromethane (CFC12), 1,2-dichloro-1,1,2,2-tetrafluoroethane (CFC114) and chlorodifluoromethane (CFC22) have been mainly used as refrigerants for refrigerators and the like. However, when released or eliminated into the air, these chlorofluoroalkanes, which are stable for a long period of time, go up in the air, reaching the ozonosphere without being degraded, where they are decomposed to give the chlorine radical. It is pointed out that this chlorine radical destructs the ozonosphere and, as a result, exerts serious adverse effects on the global ecosystem as well as on the mankind. It is international consensus that, among the above chlorofluoroalkanes, CFC11, CFC12 and CFC114, which can highly possibly destruct the ozonosphere, should be controlled from the production and use viewpoints.

Among the chlorofluoroalkanes mentioned above, HCFC22 has a considerably low ozonosphere depletion potential (ODP) as compared with the targets of control mentioned above (about one twentieth of the ODP of CFC11, for instance), hence is not the target of control. Desirably, however, HCFC22, too, should be substituted for by some or other compound with an ODP of zero in the future.

Controlled production and use of these refrigerants, which are indispensable for refrigerators and the like, will result in restrictions or limitations in the living environment as well as in the storage and transport of foodstuffs, exerting significant influences on the whole human society. It is an urgent task to develop refrigerants which can substitute for the refrigerants mentioned above but will not destruct the ozonosphere.

As candidate substitutes for the above-mentioned chlorofluoroalkanes, there may be mentioned hydrogen-containing chlorofluoro- or fluoroalkanes such as dichloromonofluoromethane (HCFC21), trifluoromethane (HFC23), difluoromethane (HFC32), monochlorotetrafluoroethane (HCFC124), pentafluoroethane (HFC125), monochlorotrifluoroethane (HCFC133a), tetrafluoroethane (HFC134a), monochlorodifluoroethane (HCFC142b) and trifluoroethane (HFC143a), among others.

These candidate substitutes, when evaluated singly, do not invariably have all the performance characteristics required for their use as refrigerants, for example incombustibility and lack of ODP.

It will be possible to use these substitutes combinedly in the form of mixtures. However, mixture refrigerants, when they are mere mixtures, can hardly ensure operational reliability since their compositions vary upon phase changes, namely evaporation and condensation, within heat exchangers.

United States Patent No. 4,943,388 (1990), for instance, discloses ternary azeotrope-like compositions comprising HFC125, HFC143a and HCFC22. However, these compositions are disadvantageous in that they contain HCFC22 and therefore their ODP is not zero and that the three components do not form an azeotropic mixture and therefore composition changes are inevitable upon the phase changes mentioned above.

On the other hand, several azeotrope refrigerants are known, for example CFC12/HFC152a = 73.8/26.2 weight percent (R500), HCFC22/CFC115 = 48.8/51.2 weight percent (R502), CFC13/HFC23 = 59.9/40.1 weight percent (R503) and HFC32/CFC115 = 48.2/51.8 weight percent (R504). However, these refrigerants are chlorine- containing ones and therefore their use will be restricted in the future.

It is a primary object of the present invention to provide a maximum boiling azeotropic composition and azeotrope-like compositions, each comprising two fluoroalkanes. A further object is to provide novel mixed refrigerants which comprise such compositions and, in particular, are zero in ODP, have relatively excellent performance characteristics required for use as refrigerants, show little composition changes upon the above-mentioned changes during operation and are noncombustible in a desired mixing ratio range.

Other objects as well as features of the invention will become apparent from the description which follows.

SUMMARY OF THE INVENTION

The present invention has been completed based on the findings that specific two fluoroalkanes, namely 1,1,1-trifluoroethane (HFC143a) and pentafluoroethane (HFC125), forms a maximum boiling azeotrope in the mixing proportions of 78 mole percent and 22 mole percent, respectively, that they form azeotrope-like mixtures showing only very small composition changes between the vapor and liquid phases in mixing proportions in the vicinity of that mentioned above, namely in the proportions such that HFC143a accounts for not less than 65 mole percent and HFC125 not more than 35 mole percent, that said mixtures have relatively good performance characteristics for their use as refrigerants and that above-mentioned azeotrope and azeotrope-like mixtures, when the HFC143a content is not more than 85.3% and the HFC125 content is not less than 14.7%, can meet the incombustibility requirement under the High-Pressure Gases Control Law of Japan.

Meanwhile, Japanese Kokai Patent Publication No. 01-92286 discloses hydraulic fluid mixtures comprising HFC143a and HFC125, like in the present invention. However, in the specification appearing in that publication, page 2, left lower column, line 6 from bottom to line 3 from bottom, it is mentioned that HFC143a and HFC125 form azeotropic mixtures in the mole ratio range of about 40:60 to about 60:40 and, further, in the same publication, in Table 1 shown on page 3, it is indicated that the mixture with a mole ratio of 60/40 has a maximum refrigerating capacity. From this, it is apparent that the above mixture has an azeotropic point at or around the above mixing ratio and that said azeotropic point is a minimum azeotropic point.

Thus, the maximum boiling azeotrope and azeotrope-like compositions of the present invention differ from the mixtures described in the patent specification cited above in properties and performance characteristics, such as form of azeotropy, composition in azeotropy, and refrigerating capacity. The above-mentioned findings on which the present invention is based can be said to be unexpectable from the description in the above-cited publication.

## BRIEF DESCRIPTION OF THE DRAWINGS

Fig. 1 graphically illustrates the maximum boiling azeotrope and azeotrope-like compositions of the present invention.

Fig. 2 graphically illustrates the combustible limits for HFC143a-HFC125 mixtures.

## DETAILED DESCRIPTION OF THE INVENTION

The two fluoroalkanes to be used in accordance with the invention are 1,1,1-trifluoroethane (HFC143a) and pentafluoroethane (HFC125).

Some typical physical characteristics of HFC143a, HFC125 and the maximum boiling azeotrope composed of these are compared below in Table 1. In the table, the liquid density is the value at the boiling point.

Table 1

| | HFC143a | HFC125 | Maximum boiling azeotropic composition of HFC143a and HFC125 |
|---|---|---|---|
| Chemical formula | $CH_3CF_3$ | $CF_3CF_2H$ | $CH_3CF_3/CF_3CF_2H$ |
| Composition (mol %) | 100 | 100 | 78/22 |
| Molecular weight | 84 | 120 | 92 |
| Boiling point ($^\circ$C) | -47.6 | -48.6 | -47.0 |
| Critical temperature ($^\circ$C) | 73.1 | 66.2 | 72.0 |
| Liquid density (g/cc) | 1.18 | 1.52 | 1.27 |
| Ozone depletion potential | 0 | 0 | 0 |

The maximum boiling azeotropic composition and azeotrope-like compositions according to the present invention may contain one or more stabilizers as necessary.

Thus, when a high level of stability is required under certain severe conditions of use, one or more stabilizers may be added in an amount of about 0.01 to about 5% on the composition weight basis, said stabilizers being selected from among epoxides such as propylene oxide, 1,2-butylene oxide and glycidol, phosphites such as dimethyl phosphite, diisopropyl phosphite and diphenyl phosphite, thiophosphites such as trilauryl trithiophosphite, phosphine sulfides such as triphenoxyphosphine sulfide and trimethylphosphine sulfide, boron compounds such as boric acid, triethyl borate, triphenyl borate, phenylboronic acid and diphenylboronic acid, phenols such as 2,6-di-tert-butyl-p-cresol, nitroalkanes such as nitromethane and nitroethane, acrylic esters such as methyl acrylate and ethyl acrylate, dioxane, tert-butanol, pentaerythritol, p-isopropenyltoluene, etc.

The compositions of the present invention may further contain one or more other compounds in an amount such that the objects and effects of the invention will not be adversely affected. Such compounds include, among others, ethers such as dimethyl ether and pentafluorodimethyl ether, amines such as perfluoroethylamine, and liquefied petroleum gas (LPG).

As mentioned hereinabove, the maximum boiling azeotropic composition and azeotrope-like compositions of the present invention can be used as refrigerants effectively. The maximum boiling azeotropic composition and azeotrope-like compositions of the invention can desirably be used as blowing agents or propellants as well in various fields of application since they have further advantages, for example their ODP is zero, and they meet the incombustibility requirement under the High-Pressure Gases Control Law of Japan, for instance.

EXAMPLES

The following working and comparative examples are further illustrative of the characteristic features of the present invention.

Example 1

Compositions composed of HFC143a and HFC125 in gas-liquid equilibrium were examined for the gaseous phase and liquid phase compositions in the following manner. Each composition sample was confined in a pressure-resistance vessel and subjected to thorough agitation by vapor-liquid and liquid-vapor phase changes respectively through a circulating pump. Thereafter, the vapor and liquid compositions were determined by gas chromatography and, at the same time, the pressure on that occasion was measured.

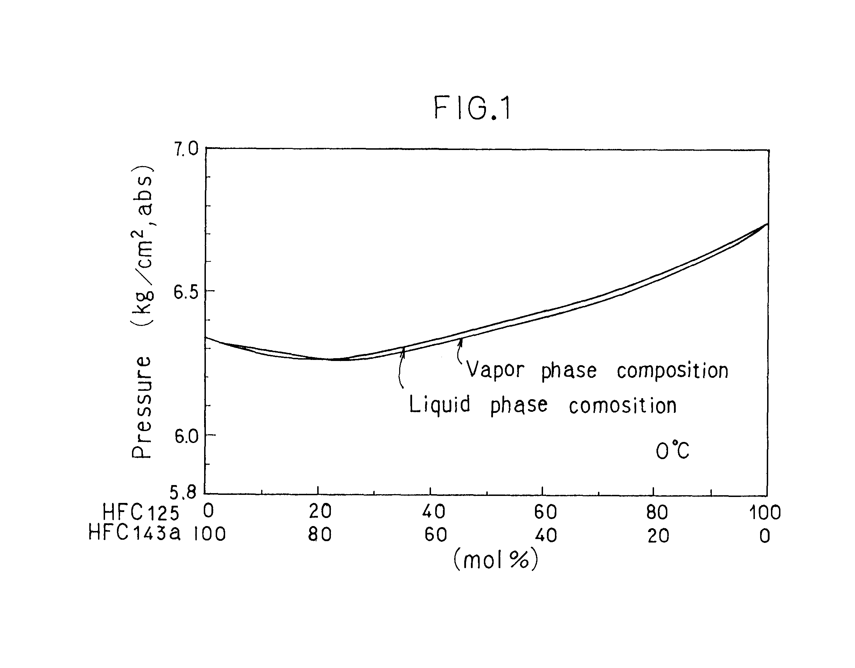

The results thus obtained are shown in Fig. 1. It is apparent that when the proportions are 78 mole percent and 22 mole percent, respectively, HFC143a and HFC125 give a maximum boiling azeotrope, which is very rare among fluoroalkane mixtures. Mixtures of the two are azeotrope-like over the whole composition range. In the range in which HFC143a accounts for not less than 65 mole percent, however, the gas-liquid composition difference is particularly small. HFC125 as a single substance shows a vapor-liquid equilibrium pressure higher than that of any of the maximum boiling azeotrope and azeotrope-like compositions of the present invention. Therefore, the maximum boiling azeotrope and azeotrope-like compositions of the invention, in any mixing ratio, can be used in those conventional apparatus or equipment designed for HFC125 without any modification thereof.

Example 2

In a refrigerator for using mixed refrigerants composed of HFC143a and HFC125, the refrigerant evaporation temperature in the evaporator was set to -45°C, the condensation temperature to 55°C, the degree of superheating at the compressor inlet to 5°C, and the degree of supercooling at the condenser outlet to 0°C. Vapor-liquid composition differences were determined by sampling the vapor and liquid phases of each refrigerant in the condenser and analyzing them by gas chromatography.

The mixing ratios (mol %) used and the data obtained with respect to coefficient of performance (COP), refrigerating capacity (kcal/m$^3$), compressor outlet gas temperature (°C) and vapor-liquid composition difference (mol %) are shown in Table 2.

From the results shown, it is evident that a higher mole percent of HFC143a gives a higher coefficient of performance and a higher refrigerating capacity.

As will be mentioned later herein, the compositions of the invention are noncombustible, namely meet the incombustibility requirement provided for by the High-Pressure Gases Control Law of Japan, when the HFC1432 content is not higher than 85.3%. Therefore, for use as refrigerants, they should desirably have a mixing ratio such as just mentioned above.

For comparison, the corresponding data for the above-mentioned R502 are also shown in the same table.

Example 3

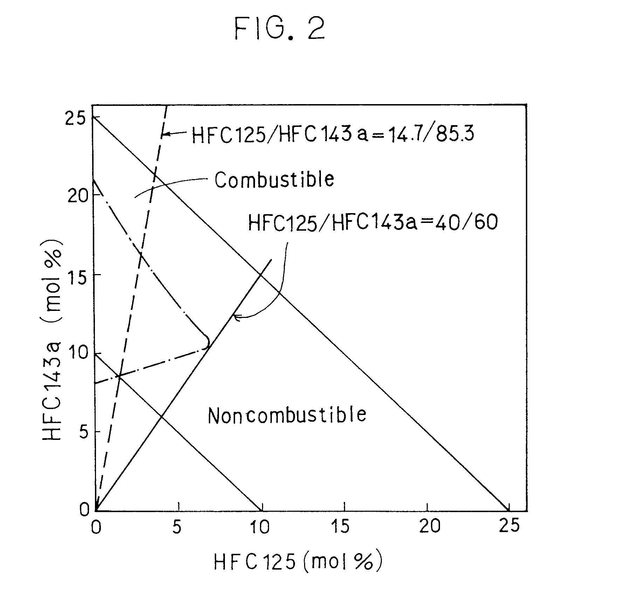

The combustible limits were determined essentially according to the method described in Article 2 of the Container Safety Rules of Japan for the determination of explosion limits as referred to in Article 2, Paragraph 1, Items a and b, of the General High-Pressure Gas Safety Rules of Japan. Thus, a mixture of HFC143a and HFC125 was charged into a spherical container with a capacity of about 2 liters using a

4

manometer for measuring the amount thereof, and thoroughly agitated. Then, air was introduced and, after a uniform composition was attained, a spark was generated using an ignition device, and whether ignition occurred or not was judged. The results thus obtained are shown in Fig. 2.

Table 2

| mixing ratio HCF143a (mol %) | HFC125 (mol %) | Coefficient of performance (COP) | Refrigerating capacity (kcal/m³) | Compressor outlet gas temperature (°C) | Vapor-liquid composition difference (in condenser) (mol %) |
|---|---|---|---|---|---|
| 0 | 100 | 0.54 | 51.2 | 66.5 | 0.000 |
| 10 | 90 | 0.62 | 57.6 | 67.5 | 0.007 |
| 20 | 80 | 0.68 | 62.3 | 68.6 | 0.011 |
| 30 | 70 | 0.73 | 66.2 | 89.8 | 0.013 |
| 40 | 60 | 0.78 | 69.5 | 71.0 | 0.012 |
| 50 | 50 | 0.81 | 72.6 | 72.3 | 0.010 |
| 60 | 40 | 0.84 | 75.5 | 73.7 | 0.007 |
| 70 | 30 | 0.87 | 78.4 | 75.1 | 0.003 |
| 78 | 22 | 0.89 | 80.8 | 78.4 | 0.000 |
| 80 | 20 | 0.89 | 81.5 | 76.6 | 0.000 |
| 90 | 10 | 0.91 | 84.7 | 78.2 | 0.001 |
| 100 | 0 | 0.93 | 88.2 | 79.7 | 0.000 |
| R502 | | 1.05 | 94.0 | 81.0 | - |

In Fig. 2, the gradient of each straight line indicates a mixing ratio between both components. Mixtures falling within the area under the solid straight line extending from downward left to upward right will not burn in any mixing ratio with air, while the area under the broken line, where the HFC143a content is not more than 85.3 mole percent and the HFC125 content not less than 14.7 mole percent, indicates that any mixture falling within said area is noncombustible in the sense of the High-Pressure Gases Control Law mentioned above.

EFFECTS OF THE INVENTION

The maximum boiling azeotropic composition and azeotrope-like composition of the present invention, each comprising two specific fluoroalkanes, are characterized in that their ODP is zero, that they have relatively good performance characteristics as required for use as refrigerants, that they show little composition differences upon vapor-liquid phase changes during refrigerator operation, and that, in desirable mixing ratios, they meet the incombustibility requirement under the High-Pressure Gases Control Low of Japan.

**Claims**

1. An azeotrope-like binary composition which comprises not less than 65 mole percent of 1,1,1-trifluoroethane and not more than 35 mole percent of pentafluoroethane.

2. An azeotrope-like composition as claimed in Claim 1 which comprises 65 to 85.3 mole percent of 1,1,1-trifluoroethane and 14.7 to 35 mole percent of pentafluoroethane.

3. A maximum boiling azeotropic composition which comprises 78 mole percent of 1,1,1-trifluoroethane and 22 mole percent of pentafluoroethane.

4. An azeotrope-like composition as claimed in Claim 1 which contains 0.01 to 5% by weight, based on the sum total of 1,1,1-trifluoroethane and pentafluoroethane, of a stabilizer.

5. A refrigerant in vapor compression system which comprises an azeotrope-like binary composition comprising not less than 65 mole percent of 1,1,1-trifluoroethane and not more than 35 mole percent of pentafluoroethane.

6. A refrigerant as claimed in Claim 5, which comprises an azeotrope-like composition comprising 65 to 85.3 mole percent of 1,1,1-trifluoroethane and 14.7 to 35 mole percent of pentafluoroethane.

7. A refrigerant as claimed in Claim 5 which comprises a maximum boiling azeotropic composition comprising 78 mole percent of 1,1,1-trifluoroethane and 22 mole percent of pentafluoroethane.

## FIG.1

EP 0 526 745 A1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | DATABASE WPIL<br>Derwent Publications Ltd., London, GB;<br>AN 89-148305<br>& JP-A-1 092 286 (ASAHI GLASS)<br>* abstract * | 1-6 | C09K5/04 |
| P,X | DATABASE WPIL<br>Derwent Publications Ltd., London, GB;<br>AN 91-262358<br>& JP-A-3 170 588 (MATSUSHITA) 24 July 1991<br>* abstract * | 1-6 | |
| P,X | DATABASE WPIL<br>Derwent Publications Ltd., London, GB;<br>AN 91-262356<br>& JP-A-3 170 583 (MATSUSHITA) 24 July 1991<br>* abstract * | 1-6 | |
| A,D | US-A-4 943 388 (SHANKLAND)<br>* abstract; claims 1,2,4 * | 1-6 | |
| P,A | WO-A-9 201 762 (DU PONT DE NEMOURS)<br>* abstract * | 1-6 | TECHNICAL FIELDS SEARCHED (Int. Cl.5 )<br><br>C09K |

The present search report has been drawn up for all claims

| Place of search | Date of completion of the search | Examiner |
|---|---|---|
| THE HAGUE | 20 NOVEMBER 1992 | NICOLAS H.J.F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.....................................................................

& : member of the same patent family, corresponding
   document

EPO FORM 1503 03.82 (P0401)